# EUROPÄISCHE PATENTSCHRIFT

(11) **EP 0 668 829 B1**
(45) Veröffentlichungstag und Bekanntmachung des Hinweises auf die Patenterteilung: **15.10.1997**
(21) Anmeldenummer: 94926759.5
(22) Anmeldetag: 20.09.1994
(51) Int. Cl.: B64C 39/02

(54) **FLUGGERÄT**
FLIGHT DEVICE
AERONEF

(30) Priorität: 21.09.1993 CH 2842/93
(43) Veröffentlichungstag der Anmeldung: 30.08.1995
(73) Patentinhaber: BIL-INNOVATIONS-STIFTUNG, FL-9490 Vaduz (LI)
(72) Erfinder: FRICK, Alexander, FL-9492 Eschen (LI)
(74) Vertreter: Troesch Scheidegger Werner AG
(86) Internationale Anmeldenummer: CH9400185
(87) Internationale Veröffentlichungsnummer: WO9508472

(56) Entgegenhaltungen:
- US-A- 3 023 980
- US-A- 3 443 775

## Beschreibung

Die Erfindung betrifft ein auf eine Last aufsetzbares und befestigbares Fluggerät gemäss dem Oberbegriff des Anspruchs 1, wobei die Last zur Ausübung von Steuerfunktionen fähig ist und mit Hilfe des Fluggeräts autonom vom Boden abzuheben und im Schwebeflug über dem Boden zu bewegen oder stationär zu halten ist. Die Last ist dabei eine im wesentlichen aufrechte Pilotperson oder eine ferngelenkte Steuervorrichtung.

Es sind Fluggeräte dieser Art bekannt, deren Triebwerkaggregat jedoch als treibstoffbetriebenes Raketentriebwerk oder treibstoffbetriebenes Gasturbinentriebwerk mit im wesentlichen nach unten gerichteten Düsen ausgebildet ist, so dass deren heisse Abgase gefährlich sind: Der erzeugte Schubstrahl ist heiss und bringt eine Gefahr für die Pilotperson durch Verbrennung und für die Umgebung durch Brandentfachung.

Zudem schränkt die hohe Temperatur dieser Abgase die Auswahl der zum Bau des Fluggeräts verwendbaren Materialien ein, beispielsweise kann für Bauteile, die den heissen Abgasen ausgesetzt sind, kein Kunststoff und gegebenenfalls nicht einmal Aluminium verwendet werden.

Die US-A-3 023 980 zeigt ein von einer Gasturbine angetriebenes Fluggerät dieser Art. Das Fluggerät weist eine Tragvorrichtung auf damit es von einer Pilotperson auf dem Rücken festgeschnallt werden kann. Als Treibstoff für die Gasturbine wird beispielsweise Benzin verwendet. Die Gasturbine treibt dabei über eine direkt verbundene, horizontal gelagerte rotierende Antriebswelle mit gleicher Drehgeschwindigkeit einen Flügelradkompressor, der Umgebungsluft angesaugt und seinerseits wieder der Gasturbine zuführt. Durch zwei Schubrohre, die von der Gasturbine zu seitlich neben der Pilotperson angeordneten Austrittsdüsen führen, wird der erzeugte heisse Gasstrom mit einer Austrittstemperatur von ca. 1200° F (700° C) ausgestossen und erzeugt so die notwendige Auftriebskraft. Zur Steuerung des Fluggerätes kann der austretende heisse Gasstrom mittels eines Steuerungshebels und drehbaren Austrittsdüsenöffnungen bezüglich der umgebenden Atmosphäre umgelenkt und orientiert werden. Die Nachteile dieses Fluggerätes sind die hohe Austrittstemperatur des ausgestossenen Gasstromes und die extrem kurze maximale Flugdauer wegen des hohen Treibstoffverbrauchs.

Die US-A-4 795 111 zeigt eine fernsteuerbare fliegende Plattform, bei der ein Kolben-Verbrennungsmotor ein ummanteltes Flügelrad direkt antreibt. Das Gerät findet zumeist als militärische oder zivile Beobachtungsplattform mit Fernsteuerung Verwendung. Die Möglichkeit, damit auch eine Pilotperson in den Schwebezustand zu bringen, wird zwar erwähnt, aber nicht beschrieben. Das Problem der heissen Abgase besteht hier zwar nicht. Die offenbarte Plattform ist nicht auf dem Rücken einer Pilotperson befestigbar. Die Ummantelung des Flügelrades geht in ein sich nicht verzweigendes, kurzes und gerades und nicht schwenkbares Schubrohr über. Insbesondere bereits bei Verwendung von zwei Schubrohren würde die Plattform zu unförmlich und zu schwer als dass sie auf dem Rücken einer Pilotperson befestigt werden könnte.

Es besteht daher ein Bedarf für ein Fluggerät der eingangs genannten Art, dessen Abgase eine so niedrige Temperatur aufweisen, dass sie im wesentlichen ungefährlich sind und zudem die Auswahl der zum Bau des Fluggeräts verwendeten Leichtbau-Materialien zu optimieren erlauben. Weiterhin ist es erwünscht ein Fluggerät zu schaffen, das eine längere Verweildauer in der Luft erlaubt.

Aufgabe der Erfindung ist es, diesen Bedarf zu decken. Zur Lösung dieser Aufgabe ist ein Fluggerät der eingangs genannten Art beschrieben, gekennzeichnet durch die im Anspruch 1 angegebene Kombination von Merkmalen. Vorteilhafte Weiterbildungen des erfindungsgemässen Fluggeräts sind in den abhängigen Ansprüchen definiert.

Die vorliegende Erfindung ermöglicht es einer Last, die zur Ausübung von Steuerfunktionen zur Steuerung des Fluggerätes fähig ist, vorzugsweise einer Pilotperson auf deren Rücken das erfindungsgemässe Fluggerät mittels Korsett bzw. Tragvorrichtung geschnallt ist, sich vom Boden in vertikaler Richtung abzuheben und während einer längeren Zeitspanne (bis zu einer Stunde und mehr) bzw. über eine lange Strecke frei zu schweben oder zu fliegen. Den Antrieb für das Fluggerät liefert beispielsweise ein treibstoffbetriebener Kolbenmotor vom Otto-Typ, welcher mittels der Antriebswelle den darüber angeordneten Flügelradkompressor antreibt, welcher mit seinem Flügelrad Luft ansaugt und sie verdichtet und beschleunigt, damit sie mit hoher Geschwindigkeit über zwei oder mehrere Schubrohre in senkrechter Richtung nach unten zum jeweiligen Austrittsende des Schubrohres geleitet wird und dort über entsprechende Düsen ausströmt. Ebenfalls als Antriebsaggregat können beispielsweise Verbrennungsmotoren vom Diesel- oder Wankel Typ verwendet werden. Auch andere Typen von Verbrennungsmotorenen, beispielsweise Wasserstoffexplosionsmotoren, können als Antriebsaggregat eingesetzt werden. Am Austrittsende der Schubrohre bewirken die Düsen eine Verengung und somit eine Beschleunigung des austretenden Luftstromes.

Durch die Möglichkeit der Abstimmung der Kompressorgeometrie auf den Antriebsmotor entfällt die Notwendigkeit eines Getriebes zur Uebersetzung oder Untersetzung zwischen der Kurbelwelle des Kolbenmotors und dem Flügelradkompressor. Der direkte Antrieb mit einer Antriebswelle zwischen der Antriebsvorrichtung und dem Flügelrad bedeutet eine wesentliche Vereinfachung, verbunden mit einer wesentlichen Gewichtseinsparung.

Trotz der Verwendung einer Antriebsvorrichtung mit drehenden Teilen entfällt beim erfindungsgemässen Fluggerät, im Gegensatz zu einem Helikopter, die Notwendigkeit, das Drehmoment des Motors durch einen besonderen Propeller auszugleichen. Das erforderliche Gegendrehmoment kann durch Ablenkung des Antriebsluftstromes von der vertikalen Strahlrichtung erreicht werden.

Die Erfindung deckt den herrschenden Bedarf an einem kleinen, leichten, im Funktionsprinzip einfachen Fluggerät, welches einer Last die zur Ausübung von Steuerfunktionen fähig ist, z.B. einer Person, die Flugfähigkeit gibt. Das erfindungsgemässe Fluggerät ist leicht manövrierbar, einfach zu transportieren, leicht montierbar sowie am Boden von einer Person zu tragen, zu starten und zu bedienen. Es können damit auch solche Flugmanöver ausgeführt werden, die mit anderen bekannten Fluggeräten, wie z. B. Flächenflugzeugen, Ultralights, Flugdrachen, motorisierten Gleitschirmen, Hängegleitern etc. nicht ausgeführt werden könnten. Es können zudem jene Regionen oder Ziele erreicht werden, welche mit einem Helikopter nicht oder nur schwer zugänglich sind, beispielsweise in engen Gebirgsschluchten. Zudem ermöglicht das erfindungsgemässe Fluggerät dank der Beseitigung der Brandentzündungsgefahr den Flug durch bewaldete Gebiete sowie zwischen schmalen Häuserzeilen und direkt an Häuserfassaden.

Einer der entscheidendsten Vorteile der Erfindung, wie auch ein wesentlicher Unterschied im Vergleich mit bereits bekannten Fluggeräten, ist die Verwendung eines Verbrennungs- bzw. Kolbenmotors. Dieser ist im Vergleich zu anderen Antriebsmöglichkeiten wie Gasturbinen, chemischen Antrieben, beispielsweise mit Wasserstoffperoxid usw. sehr viel effizienter und wirtschaftlicher sowie technisch einfacher, was eine wesentlich längere Flugdauer ermöglicht. Ein weiterer Vorteil des Kolbenmotors liegt in seiner einfachen, robusten Handhabung sowie in den niedrigen Anschaffungs- und Betriebskosten. Auch die Wartung und der Unterhalt sind wesentlich billiger, als dies bei Gasturbinen der Fall ist. Als Treibstoff können die üblichen Treibstoffe für Kolbenmotoren verwendet werden, so dass die bereits vorhandene Infrastruktur eine problemlose Versorgung mit Treibstoff ermöglicht.

Dank der niedrigen Temperatur des Luftstromes der vom Flügelradkompressor erzeugt und durch die Schubrohre ausgestossen wird, können mit Vorteil wichtige Maschinenbestandteile, wie beispielsweise die Schubrohre und/oder der Flügelradkompressor, aus leichten Faserverbundwerkstoffen gebaut werden. Dieser Vorteil ergibt sich selbst dann, wenn die Abgase des Kolbenmotors dem ausgestossenen Luftstrom beigemischt werden.

Eine günstige Verwendung des erfindungsgemässen Fluggeräts ist sein Einsatz als Transportmittel für Erste Hilfe-Leistungen bei Rettungseinsätzen in schwer zugänglichen Gebieten oder in Ballungszentren von Grosstädten, wo infolge des Verkehrs oder anderer Behinderungen verletzte Personen durch herkömmliche Transportmittel nicht rechtzeitig erreicht werden können. Eine günstige Verwendung des erfindungsgemässen Fluggeräts ist sein Einsatz bei Grossbränden an Hochhäusern, um zu erlauben, Rettungssysteme für gefährdete Personen anzubringen bzw. diese durch ein solches Fluggerät auszufliegen. Dies ist besonders dann sinnvoll, wenn herkömmliche Mittel wie Rettungsleitern oder Helikopter nicht einsetzbar oder nicht zweckmässig sind.

Im weiteren stellt das erfindungsgemässe Fluggerät ein besonders leichtes, kleines und kostengünstiges Lufttransportmittel zur Verfügung, wofür Start- und Landeflächen auf kleinstem Raum ausreichend sind. Es ist bezüglich Lande- bzw. Startumgebung wesentlich unempfindlicher als beispielsweise mit Gasturbinen angetriebene Fluggeräte, bei denen in Bodennähe die Gefahr besteht, dass Abgasrezirkulation den Schub reduziert oder dass Verunreinigungen wie Staub, Laub, Steinchen usw. in das Triebwerkaggregat angesaugt werden und dieses beschädigen.

Das erfindungsgemässe Fluggerät ist somit geeignet, auf kostengünstige und schnelle Weise schwer zugängliche Gebiete zu erreichen, beispielsweise um Kontroll- und Ueberwachungsaufgaben auszuführen. Das erfindungsgemässe Fluggerät ist einfach zu manövrieren und ermöglicht der Pilotperson, durch bewaldetes Gebiet zu fliegen und sehr kleine Deckungsräume auszunützen. Auch das Fliegen über längere Distanzen in Bodennähe ist durchaus möglich. Zahlreiche Verwendungsmöglichkeiten bestehen somit im militärischen Einsatz, wobei der beachtliche Aktionsradius des Fluggerätes sowie seine kompakte Bauart dabei entscheidend sind und sehr breite Einsatzmöglichkeiten ergeben. Aber auch in der allgemeinen luftsportlichen Betätigung liegt eine weitere und sehr interessante Anwendung des erfindungsgemässen Fluggeräts.

Durch die bevorzugte, neuartige und besonders einfache Antriebsart, welche sich aus der Kombination von Verbrennungsmotor, ummantelten Flügelrad und doppeltem Schubrohr ergibt, ist es einerseits möglich geworden, eine optimale Führung der Luftströme zu erreichen und somit die Antriebsenergie des Motors mit einem hohen Wirkungsgrad umzusetzen. Durch die direkte Koppelung der Drehachsen des Verbrennungsmotors und des Flügelradkompressors, sowie die optimale Abstimmung des Drehzahlbereichs des Verbrennungsmotors auf die aerodynamischen Formgebung des Flügelradkompressors wird erreicht, dass der Luftstrom durch die Gesamtheit der Schubrohre mit Unterschallgeschwindigkeit ausgestossen wird, wodurch der Wirkungsgrad der Auftriebsvorrichtung, d.h. der Antriebsvorrichtung mit Flügelradkompressor, gegenüber einem gasturbinenbetriebenen Fluggerät, dessen Gasstrom in einem sehr viel höheren Geschwindigkeitsbereich ausgestossen wird, weiter gesteigert wird. Das erfindungsgemässe Fluggerät hat deshalb einen geringen Treibstoffverbrauch und erlaubt folglich, längerdauernde Flüge auszuführen.

Nachstehend werden Ausbildungsbeispiele des erfindungsgemässen Fluggeräts anhand der Zeichnung naher erläutert, wobei in den verschiedenen Figuren die gleichen Teile mit den gleichen Bezugsziffern bezeichnet sind.
- Fig. 1a, 1b, 1c und 1d: zeigen jeweils in schematischer Seitenansicht, Vorderansicht mit teilweiser Schnittdarstellung, Vorderansicht und Draufsicht ein Ausbildungsbeispiel eines erfindungsgemässen Fluggeräts, welches auf den Rükken einer Pilotperson geschnallt ist.
- Fig. 1e, 1f: zeigen Wasserkühler am Kompressoransaugtrichter zur Kühlung des Kolbenmotors.
- Fig. 1g: zeigt einen von der Antriebswelle angetriebenen Kühlrotor und einen Wasserkühlteil zur Kühlung des Kolbenmotors.
- Fig. 1h: zeigt Wasserkühlelemente an den Schubrohrenden zur Kühlung des Kolbenmotors sowie eine ferngelenkte Steuervorrichtung anstelle der Pilotperson.
- Fig. 1i: zeigt ein Bypassystem zur Aufladung der Motorleistung des Kolbenmotors.
- Fig. 1j: zeigt ein als Startriemenscheibe ausgebildeter Anschlussflansch.
- Fig. 2: zeigt den Aufbau des Kardangelenks im Bereich des Flügelradkompressors.
- Fig. 3: zeigt in schematischer Draufsicht einen Teil des erfindungsgemässen Fluggeräts der Fig. 1a, 1b, 1c und 1d zur Veranschaulichung einer Möglichkeit der Drehmoment-Kompensation.
- Fig. 4a, 4b, 4c und 4d: zeigen jeweils in schematischer Seitenansicht einen Teil des erfindungsgemässen Fluggeräts der Fig. 1a, 1b, 1c und 1d zur Veranschaulichung von Möglichkeiten zur Einstellung der Richtung des austretenden Luftstromes.
- Fig. 5: zeigt schematisch die Funktionsweise eines Rettungssystemes des erfindungsgemässen Fluggeräts der Fig. 1a, 1b, 1c und 1d.

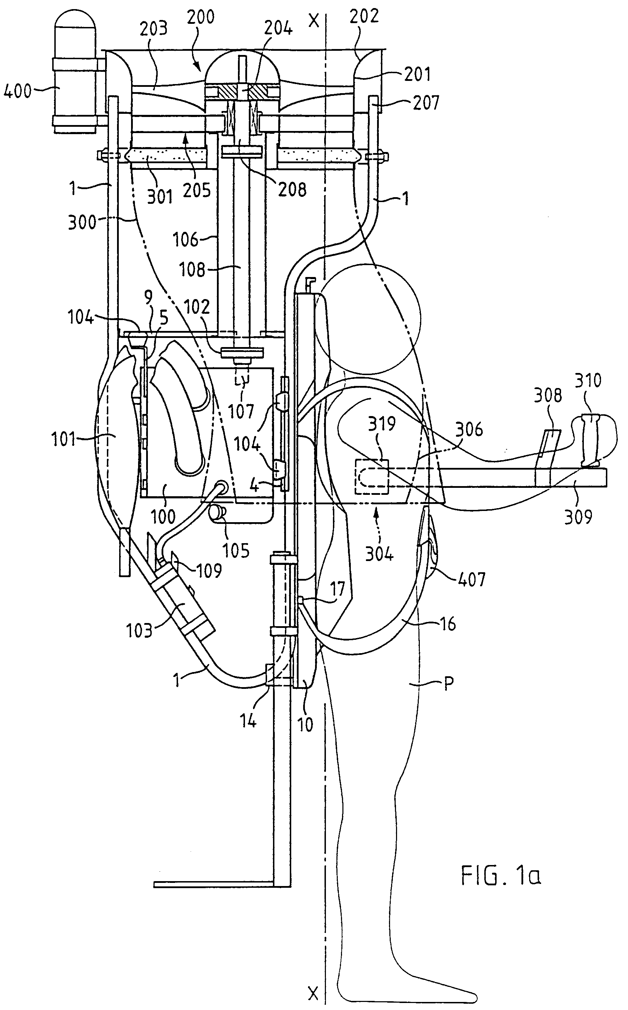

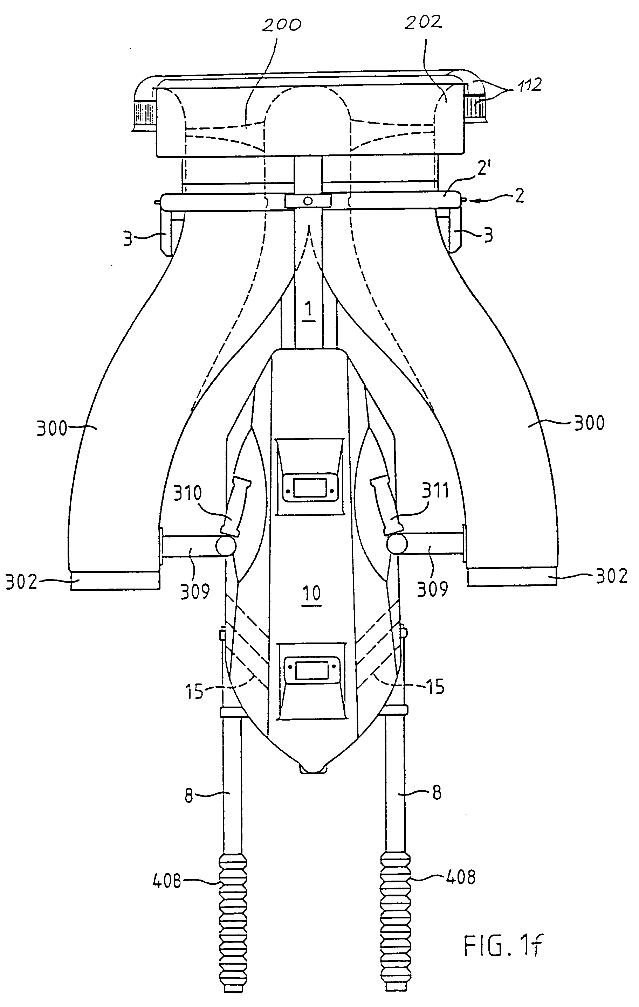

Wie insbesondere in Fig. 1a ersichtlich ist, liegt das Fluggerät an dem Rücken einer Pilotperson P auf. Ein Korsett ist als Treibstoffbehälter 10 ausgebildet und bildet die Berührungsfläche mit dem Rücken der Pilotperson P. Durch ein Gurtensystem 16, welches als Sitz ausgebildet ist, wird mit einer Gurtenlaschenbefestigung 17 eine kraftschlüssige Verbindung zwischen Pilotperson und Fluggerät erreicht. Gleichzeitig dient dies auch zum Tragen des Gerätes durch die Pilotperson P vor und nach dem Flug. Eine gemeinsame Schwerpunktachse X von Fluggerät und Pilotperson bzw. Last verläuft in normaler Fluglage des Fluggerätes zwischen einer Antriebsvorrichtung 100 und der Pilotperson P im wesentlichen durch die Mitte von Austrittsdüsen 304, 305, die vorzugsweise über dem gemeinsamen Schwerpunkt von Fluggerät und Pilotperson P angeordnet sind. Die Pilotperson P regelt mit einem Gasgriff 310 an einem von zwei Steuerarmen 309 die Leistung eines Kolbenmotors, der die Antriebsvorrichtung 100 bildet und der mittels eines Handstarters 105 gestartet werden kann. Die Antriebsvorrichtung 100 wird über ein gebräuchliches Gemischbildungssystem aus dem Treibstoffbehälter 10 mit Treibstoff versorgt. Der Treibstoffbehälter 10 kann dabei in mehrere Teile unterteilt sein oder es können auch mehrere Treibstoffbehälter vorgesehen werden.

Am Fluggerät ist ein Flügelradkompressor 200 mit Kohlefaser-Kompressorflügeln 203 angeordnet, dessen Stahl-Flügelradwelle 208 über eine Kohlefaser-Antriebswelle 108, die in normaler Fluglage des Fluggerätes im wesentlichen senkrecht steht, mit einer Kurbelwelle 107 der Antriebsvorrichtung 100 gekoppelt ist.

Die Flügelradwelle 208 endet in einer aus Aluminium bestehenden Kompressornabe 204, in welcher die Kompressorflügel 203 eingebaut sind. Dabei ist die Flügelradwelle 208 vorzugsweise mit selbstschmierenden Lagern ausgerüstet. Der Flügelradkompressor 200 saugt über einen aus Kohlefaser bestehenden Kompressoransaugtrichter 202, der sich in normaler Fluglage des Fluggerätes im wesentlichen in horizontaler Lage über der Pilotperson befindet, Luft aus der Umgebung an und stösst sie mit hoher Geschwindigkeit durch einen aus Kohlefaser bestehenden Stator 205, der zur Begradigung des Luftstromes dient, senkrecht sowie gleichmässig verteilt auf zwei aus Kohlefaser bestehende Schubrohre 300 nach unten aus. Seitlich neben der Pilotperson P an den Luftaustrittsenden der Schubrohre 300 angeordnete Austrittsdüsen 304, 305 liefern den Auftriebsschub, um Pilotperson und Fluggerät vom Boden abzuheben und schwebend zu halten.

Eine Leistungssteigerung der Antriebsvorrichtung 100 hat eine Erhöhung der Drehzahl des Flügelradkompressors 200 zur Folge. Die Leistungsaufnahme der Kompressorflügel 203 hat eine Erhöhung der Luftaustrittsgeschwindigkeit aus den Austrittsdüsen 304,305 und damit eine Vergrösserung des Auftriebsschubs zur Folge.

Durch das Ausgleichen des Kompressoraustrittsdralles mittels auf die Kompressorgeometrie abgestimmte, aus Kohlefaser bestehende Statorschaufeln entsteht eine sehr effektive Umsetzung der Motorleistung der Antriebsvorrichtung 100 in Strömungsenergie, die den Schubrohren 300 zugeleitet wird. Dies ist eine wesentliche Verbesserung im Vergleich zu herkömmlichen Helikopterrotorantrieben sowie Propellerantrieben. Eine Torsionshülse 106 ist an ihrem oberen Ende mit einem Statorflügelrad 205' und an ihrem unteren Ende mit einem Verbindungsspant 9 verschraubt. Der Verbindungsspant 9 ist an seinen beiden Enden fest mit einem Rahmen 1 verbunden, der die Antriebsvorrichtung 100, den Treibstoffbehälter 10 und den Flügelradkompressor 200 trägt. Dadurch wird die tragende Konstruktion versteift und die Verwindung des Rahmens 1 durch das von der Antriebsvorrichtung 100 erzeugte Drehmoment vermieden.

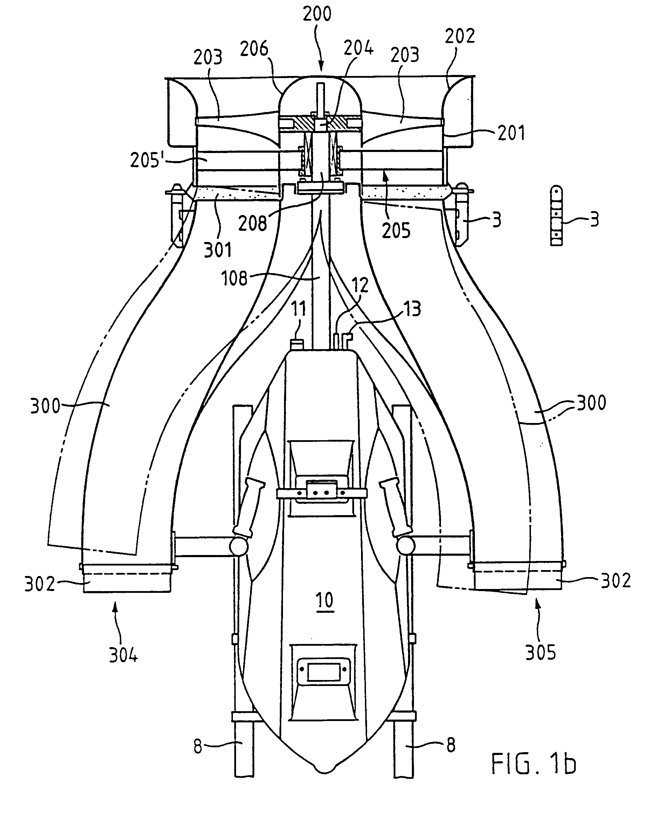

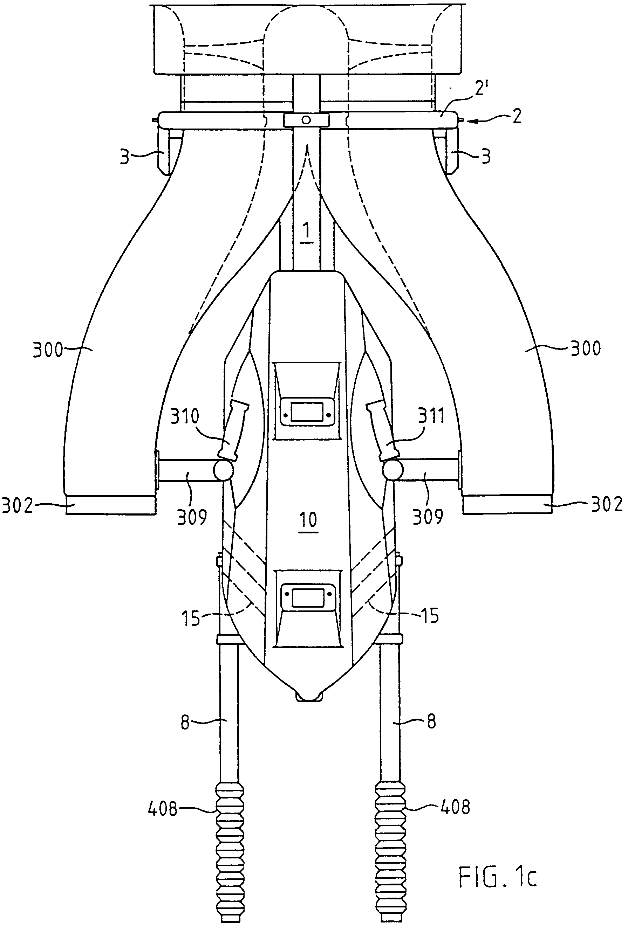

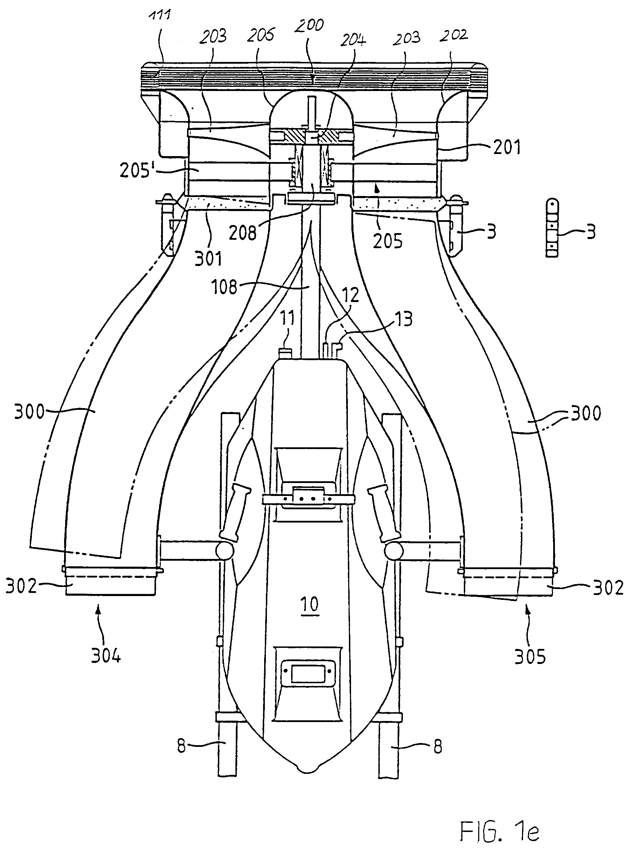

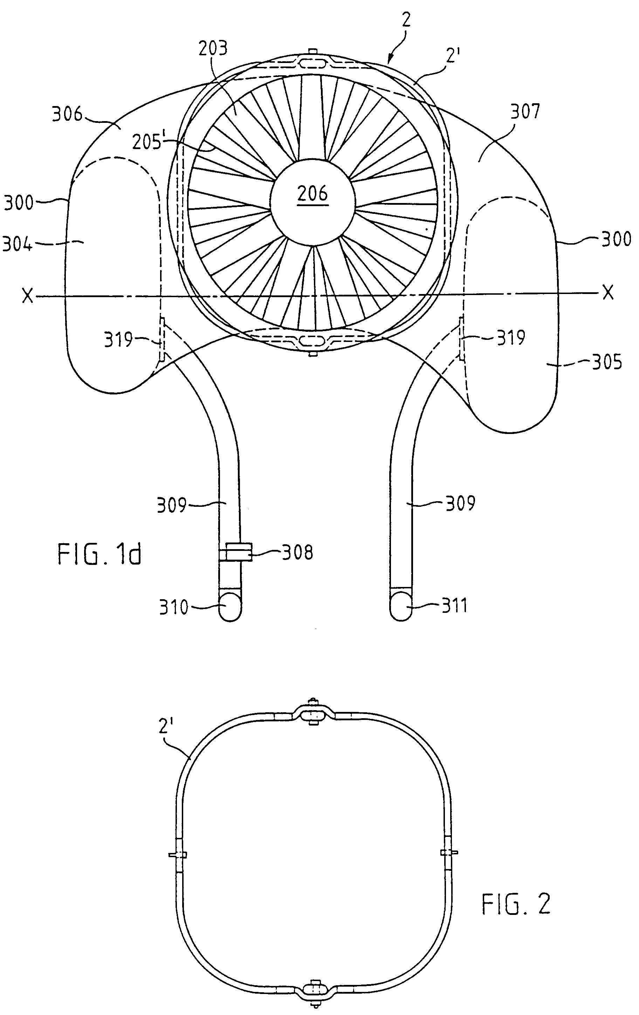

Ueber die Steuerarme 309, welche mittels einer Schraubverbindung 319 fest mit dem Schubrohren 300 verbunden sind und ein Kardangelenk 2 (siehe insbesondere Fig. 1c, 1d und Fig. 2), das die Schubrohre 300 mit dem Stator 205 des Flügelradkompressors 200 verbindet, können die beiden Schubrohre 300 sowie die an deren Luftaustrittsenden befindlichen Austrittsdüsen 304, 305 in einem Winkel von etwa ±10° in jede Richtung bewegt werden (siehe gestrichelt dargestellte Auslenkstellung in Fig. 1b). Diese Steuerbewegung ermöglicht der Pilotperson, die resultierende Kraft des durch die Schubrohre 300 ausgestossenen Luftstromes so zu verändern, dass sie mit der Schwerpunktachse X des vollständigen Fluggerätes einschliesslich der Pilotperson zusammenfällt und so den Schwebeflug ermöglicht. Mit kleinen Abweichungen von dieser Einstellung wird zusätzlich eine Flugbewegung in horizontaler Richtung bewirkt. Diese Einstellmöglichkeit muss auch deshalb vorhanden sein, um die unterschiedlicher Gewichte der Pilotpersonen zu berücksichtigen.

Die effektivste Methode, das Drehmoment der Antriebsvorrichtung 100 und des Flügelradkompressors 200 mit einem Gegendrehmoment auszugleichen, besteht in einer Verwindung 306, 307 (siehe insbesondere Fig. 1a und 1d) der beiden Schubrohre 300, so dass deren Austrittsdüsen 304, 305 den Schubstrahl in einer Weise umlenken, welche das Drehmoment aufhebt. Die Feineinstellung der Drehmomentkompensation kann dabei mittels Trimmflügeln 302, die im Bereich der Austrittsdüsen 304, 305 angeordnet sind, erfolgen.

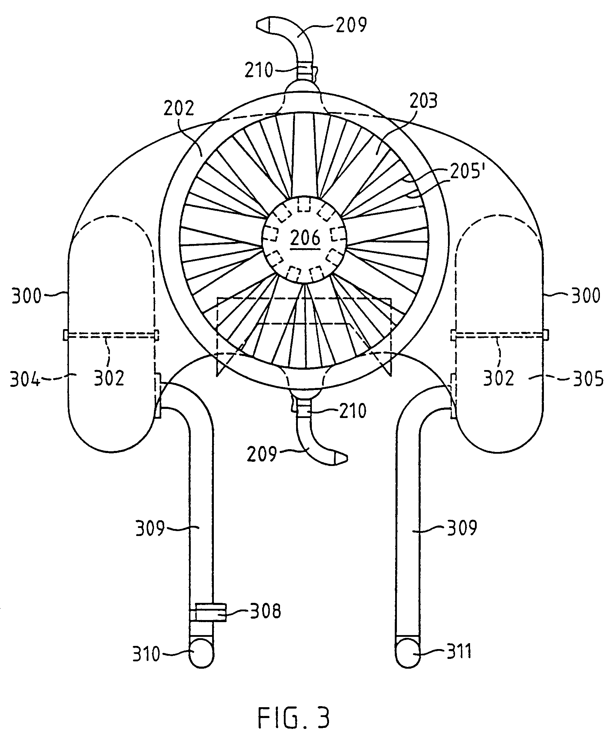

Eine weitere Möglichkeit, das von der Antriebsvorrichtung 100 und dem Flügelradkompressor 200 erzeugte Drehmoment durch ein Gegendrehmoment auszugleichen, ist in Fig. 3 ersichtlich und besteht darin, vom erzeugten Luftstrom eine kleine Menge abzuzweigen. Dies wird mit zwei Ablenkdüsen 209 erreicht, die im Abstand von der Schwerpunktachse X die abgezweigten Luftströme mit einer 90°-Ablenkung in tangentialer Richtung umlenken und ausblasen. Mit Hilfe eines an einem der Steuerarme 309 angeordneten Drehgriffs 311 sind Drosselklappen 210 verstellbar, um die aus den Ablenkdüsen 209 ausgeblasenen Luftströme und somit das Gegendrehmoment zu steuern.

Die Auslenkung der Schubrohre 300 erfolgt durch das Kardangelenk 2 mit einem Kardanring 2' zur Aufhängung der Schubrohre 300 am Rahmen 1 mit Hilfe von Bügelverbindungen 3 (siehe insbesondere Fig. 1b). Um den zwischen einem gegenüber dem Rahmen 1 feststehenden Kompressormantel 201 und den Schubrohren 300 entstandenen Bewegungsfreiraum abzudichten, wird ein Auslenkungskompensator 301, der einen Balg mit einer oder mehreren Wellen umfasst und gleichzeitig als Luftstromverteiler dient, mittels Spannringen befestigt oder direkt einlaminiert bzw. materialabhängig (in variablen Materialmöglichkeiten) entsprechend verbunden. Auf diese Weise kann zur Flugstabilisierung der entstandene Schubstrahl mit geringen Verlusten im erforderlichen Bereich umgelenkt werden. Eine entsprechende Abdichtung wird beim Durchtritt der Antriebswelle 108 angebracht. Der Kompressormantel 201, welcher den Flügelradkompressor 200 umgibt, ist über eine Rahmenaufnahme 207 mit dem Rahmen 1 sowie mit der Antriebsvorrichtung 100 und dem Treibstoffbehälter 10 fest verbunden.

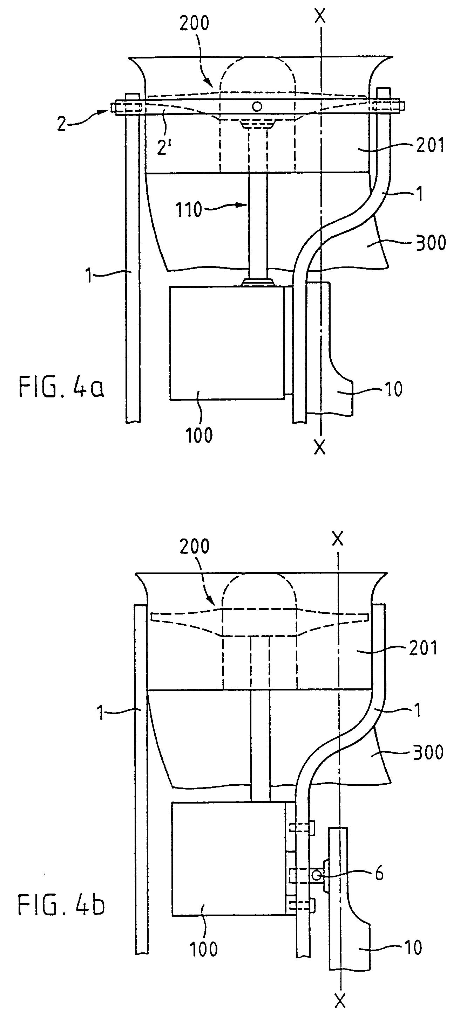

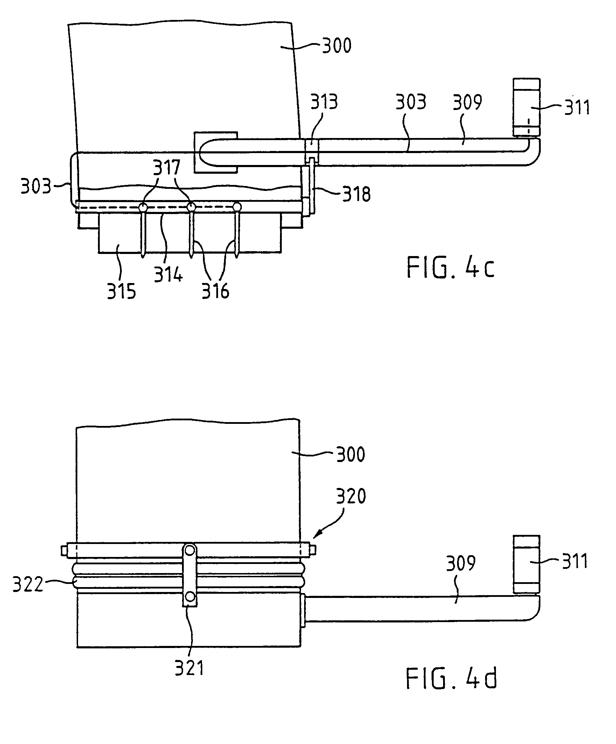

Weitere mögliche Lösungen zur Umlenkung und Ablenkung des Schubstrahles bzw. zur Steuerung des Fluggeräts und Stabilisierung des Gleichgewichts sind in den Fig. 4a, 4b, 4c und 4d dargestellt.

Es ist in Fig. 4a ersichtlich, dass die Antriebsvorrichtung 100 mit dem Rahmen 1 sowie mit dem Treibstoffbehälter 10 und der daran angebrachten Tragvorrichtung eine erste Einheit bilden, dass die Gesamtheit der Schubrohre 300 mit dem Flügelradkompressor 200 eine zweite Einheit bilden und dass die Antriebsvorrichtung 100 mit dem Flügelradkompressor 200 über eine kardanische Welle 110 verbunden ist. Diese kardanische Welle 110 umfasst beispielsweise wie dargestellt zwei homokinetische Kardangelenke. Die Steuerung wird mittels Verschiebung der vertikalen Schwerpunktachse X durch ein Kardangelenk 2 zwischen der ersten und der zweiten Einheit im Bereich des Kompressormantels 201 erreicht.

Es ist in Fig. 4b ersichtlich, dass die Antriebsvorrichtung 100, der Rahmen 1, der Flügelradkompressor 200 und die Gesamtheit der Schubrohre 300 eine erste Einheit bilden und dass der Treibstoffbehälter 10 mit der daran angebrachten Tragvorrichtung für die Pilotperson P eine zweite Einheit bilden, wobei die beiden Einheiten durch ein Dreh- und Kippgelenk 6 im Bereich der Tragvorrichtung miteinander verbunden sind. Durch Richten der resultierenden Auftriebskraft kann das Fluggerät gesteuert werden.

Es ist in Fig. 4c ersichtlich, dass zur Steuerung und Stabilisierung des Fluggeräts kreuzweise angeordnete Steuerflügel 315, 316 längs und quer auf einer um die eigene Achse beweglichen Hohlwelle 314 befestigt sind, wodurch der ausgestossene Luftstrom in eine beliebige Richtung abgelenkt werden kann. In der Hohlwelle 314 ist ein Kabelzug 303 geführt, mittels welchem über Drehachsen 317 durch den Drehgriff 311 die Steuerflügel 316 bewegt werden. Mit der Hohlwelle 314 fest verbunden ist der Steuerflügel 315. Dieser wird über einen Steuerbügel 318 durch Drehung des Steuerarms 309 in einem Drehgelenk 313 um die eigene Achse bewegt. Mittels dieser an den Luftaustrittsenden der Schubrohre 300 angeordneten Schubstrahlablenkung kann die Stabilisierung und Steuerung des Fluggeräts erreicht werden.

Es ist in Fig. 4d ersichtlich, dass zur Steuerung und Stabilisierung des Fluggeräts am Ende des Schubrohrs 300 Steuerdüsen 312 mittels eines weiteren Kardanrings 320 sowie weiteren Verbindungsbügeln 321 beweglich befestigt sind. Dabei sind die Steuerarme 309 mit den beweglichen Steuerdüsen 312 fest verbunden. Der Bewegungsfreiraum zwischen den Steuerdüsen 312 und den Schubrohren 300 wird mittels eines weiteren Auslenkungskompensators 322 abgedichtet. Durch Ablenkung des Schubstrahls wird eine stabile Gleichgewichtslage erreicht bzw. kann das Fluggerät gesteuert werden. Bei Verwendung von weiteren Kardanringen 320 zur Steuerung und Stabilisierung des Fluggerätes kann das Kardangelenk 2 natürlich entfallen.

Um im Schwebeflug die Drehung um die eigene Achse zu ermöglichen bzw. um enge Kurven zu fliegen, werden über einen Kabelzug 303 mittels des Drehgriffes 311 die Trimmflügel 302 (siehe Fig. 1b, 1c) bewegt, die den Luftstrom je nach ihrer Einstellung entweder nach vorne oder nach hinten ablenken. Diese Ablenkung gleicht nebst der Steuerhilfe zusätzlich noch teilweise das Drehmoment des Flügelradkompressors 200 und der Antriebsvorrichtung 100 aus. Einen wichtigen Aspekt in Bezug auf die Motorleistung bei einer Antriebsvorrichtung mit einem Verbrennungsmotor bzw. einem Kolbenmotor bildet ein an der Antriebsvorrichtung 100 vorgesehenes Auspuffsystem 101. Die Endrohre des Auspuffsystems 101 sind in allgemeiner Abstrahlrichtung nach unten gerichtet und liefern durch die Motorabgase einen zusätzlichen Auftrieb. Ein Wasserkühler 103 zur Kühlung des Zylinderkopfes des Kolbenmotors ist so angeordnet, das er möglichst gut von der Umgebungsluft durchströmt wird. Diese Durchströmung kann mittels entsprechender Luftleitschaufeln 109 im Luftstrom der Austrittsdüsen 304, 305 bewerkstelligt bzw. gefördert werden.

Die Antriebsvorrichtung 100 ist mittels einer Motoraufhängung 4 mit Hauptbefestigungsschrauben auf Vibrationsdämpfern 104 am Rahmen 1 befestigt. Zusätzlich besteht die Möglichkeit, den Kolbenmotor am Zylinderkopf über die Zylinderkopfverschraubung mittels einer Zylinderkopfaufhängung 5 am Rahmen 1 vibrationshemmend zu befestigen. Ein schwingungsdämpfender Anschlussflansch 102 mit sternförmiger Gummilagerung der Motorwelle oder Kurbelwelle 107 verbindet diese vibrationshemmend mit der schwingungsdämpfenden aus Kohlefaser bestehenden Antriebswelle 108. Der Treibstoffbehälter 10 mit daran angebrachter Tragvorrichtung wird direkt auf den Rahmen 1 gummigelagert aufgeschraubt. An einer Oberseite des Treibstoffbehälters 10 befinden sich ein Tankeinfüllstutzen 13, eine Tankentlüftung 12 des Treibstoffbehälters 10 sowie eine elektrische Messeinheit 11 zur Messung des Inhalts des Treibstoffbehälters. Ein Treibstoffanschlussnippel 14 befindet sich an einem untersten trichterförmig verjüngten Ende des Treibstoffbehälters 10. Schwellwände 15 oder eine Ausschäumung des Treibstoffbehälters 10 verhindern ein Schwenken des darin befindlichen Treibstoffes. Instrumente 308 zur Anzeige des Inhaltes des Treibstoffbehälters 10, der Drehzahl der Antriebsvorrichtung 100 und der Temperatur der Antriebsvorrichtung 100 befinden sich am Steuerarm 309. Ein Ständer 8 bzw. Standbein des Fluggeräts ist mit dem Rahmen 1 höhenverstellbar verschraubt und erlaubt, das Fluggerät selbststehend abzustellen. Der Ständer 8 kann während des Fluges eingefahren bzw. hochgezogen werden und verfügt über einen Stossdämpfer, welcher bei einem Aufprall des Fluggeräts am Boden als Aufprallabsorber 408 dient. Der Ständer 8 kann auch so ausgebildet sein, dass er eine Drehachse hat oder dass er während des Fluges als Standfläche für die Pilotperson dient (nicht gezeigt). Eine Verschalung 206 der Kompressornabe 204 des Flügelradkompressors 200 verbessert die aerodynamische Zuführung der angesaugten Luft.

Eine weitere Variante zur Kühlung des Kolbenmotors ist in den Fig. 1e und 1f dargestellt. Ein Ringwasserkühler 111 (Fig. 1e) oder ein Ringwasserkühler 112 mit Luftführungsring (Fig. 1f) sind kreisförmig ausgebildet und schliessen sich nahtlos an den Kompressoransaugtrichter 202 des Flügelradkomressors 200 an, welcher im Betrieb einen Teil der zuströmenden Luft durch den Ringwasserkühler 111, 112 ansaugt. Durch die gezeigte optimale Anordnung des Ringwasserkühlers am Rand des Kompressoransaugtrichters 202, bzw. durch Anordnung eines Luftführungsrings zur besseren Luftzuführung zum Ringwasserkühler wird die mit hoher Geschwindigkeit angesaugte Luft nicht gestört, sondern gefördert.

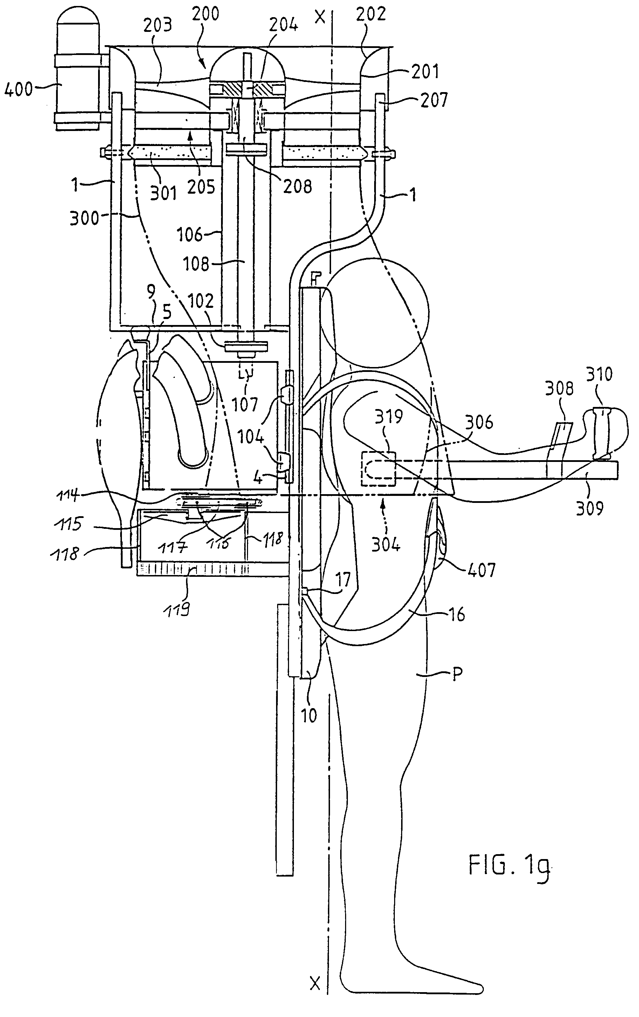

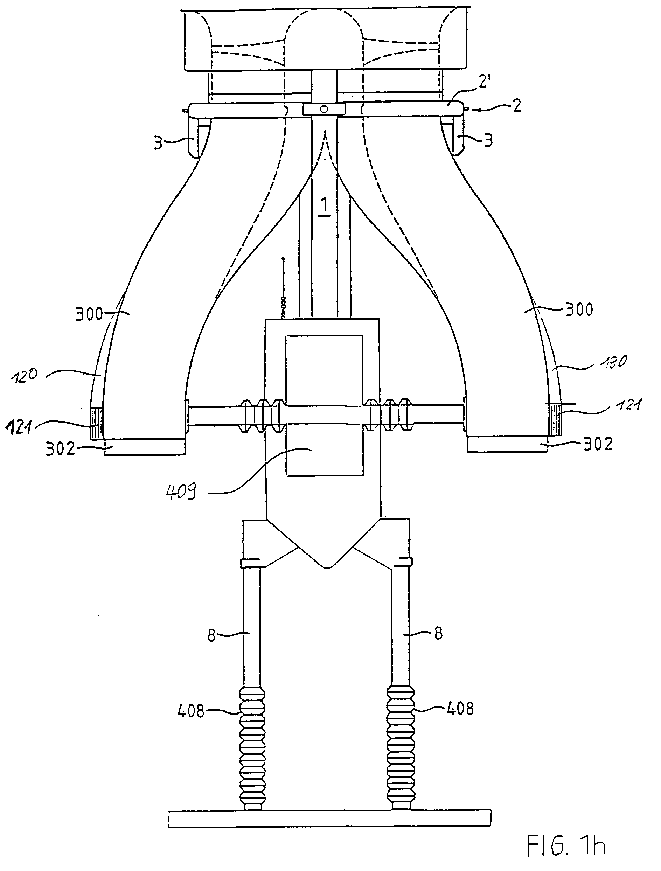

Noch eine weitere Variante zur Kühlung des Kolbenmotors bzw. der Antriebsvorrichtung 100 ist in Fig. 1g dargestellt. Mittels eines Befestigungsrahmens 114 ist ein Kühlrotor 115 unter der Antriebsvorrichtung 100 angebracht. Der Antrieb des Kühlrotors 115 erfolgt über einen Zahnriemen 117 und eine am unteren Ende der Kurbelwelle 107 befestigte Riemenscheibe 116. Der durch den Kühlrotor 115 erzeugte Luftstrom wird mittels eines Luftleitkanals 118 einem darunter liegenden Flachkühler 119 zugeführt und durchströmt diesen. Durch Verwendung von Riemenscheiben 116 mit verschiedenen Durchmessern kann die Drehzahl des Kühlrotors 115 verändert werden.

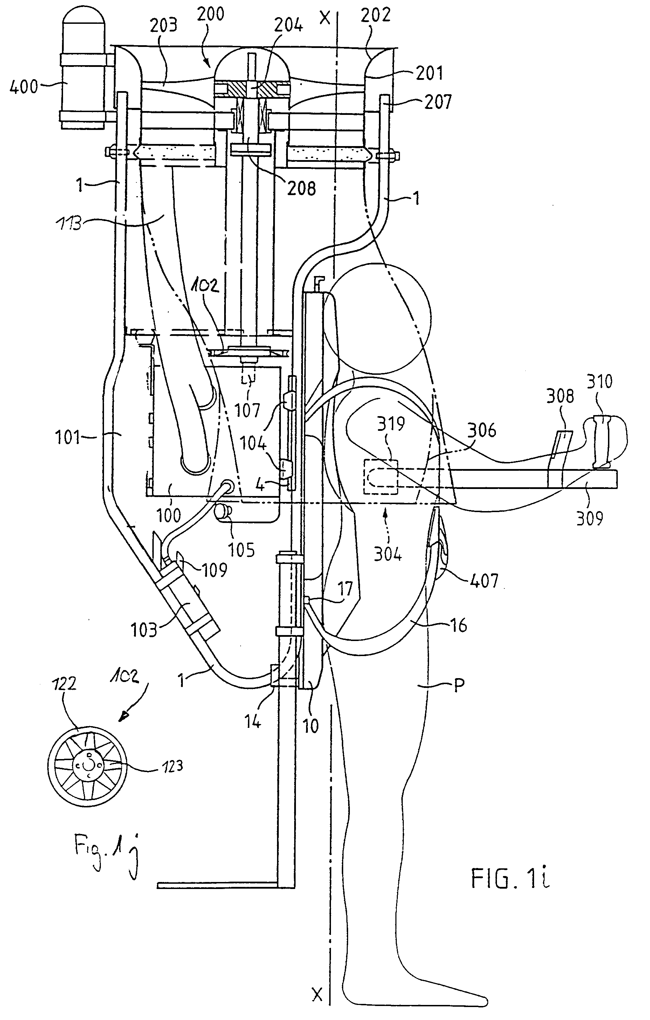

Abermals eine weitere Variante zur Kühlung des Kolbenmotors ist in Fig. 1h dargestellt. Diese Figur zeigt zudem auch den möglichen Ersatz der Pilotperson (P) durch eine ferngelenkte Steuervorrichtung (409). Zur Kühlung des Kolbenmotors wird mittels Luftleitkanäle 120 am Schubrohr Luft vom Hauptstrom in den Schubrohren 300 abgelenkt und Wasserkühlelementen 121, die an den Schubrohrenden angeordneten sind, zugeführt. Mit dem Ersatz der Pilotperson (P) durch eine ferngelenkte Steuervorrichtung 409 kann das Fluggerät auch unbemannt verwendet werden. Die ferngelenkte Steuervorrichtung 409 übernimmt dabei die Auslenkung der Schubrohre 300 zur Steuerung bzw. zur Gleichgewichtsregelung. Durch den wesentlich besseren Wirkungsgrad des Flügelradkompressors im Vergleich zu einem Helikopter der gleichen Gewichtsklasse eignet sich das ferngesteuerte Fluggerät dieser Art besonders für Materialtransporte sowie für Ueberwachungsaufgaben.

Fig. 1i zeigt ein Bypassystem 113 zur Aufladung der Motorleistung des Kolbenmotors. Das Bypassystem 113 ist unter dem Statorring 205 des Flügelradkompressors 200 angeordnet und direkt mit den Ansaugtrichtern der Motorvergaser verbunden.

Gemäss Fig. 1j kann der motorseitige Anschlussflansch 102 als Anschlussflansch mit Startriemenscheibe 122 ausgebildet sein, so dass der Motor mittels eines auf der Startriemenscheibe 122 aufwickelbaren Seiles, welches von Hand abziehbar ist, gestartet werden kann. Verbindungsspeichen 123 des Anschlussflansches mit Startriemenscheibe 122 weisen eine flügelartige Verwindung auf, so dass sie bei der Rotation für eine Luftzirkulation sorgen welche die darüber bzw. darunter angeordneten Teile kühlt.

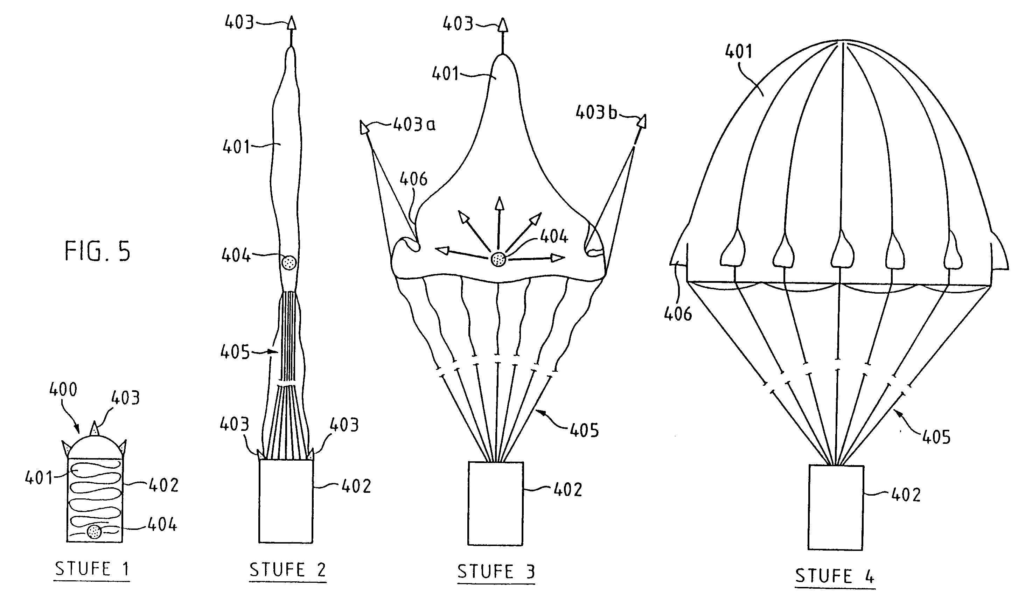

Wie in Fig. 5 ersichtlich besteht ein Notrettungssystem 400 aus einem mittels Treibsatz ausschiessbaren Fallschirm 401, dessen Mechanismus mit Betätigung einer Notfallschirmlasche 407 oder automatisch ausgelöst wird. Durch die sehr geringe Flughöhe in welcher das Fluggerät grösstenteils eingesetzt wird, ergibt sich die Notwendigkeit einer äusserst schnellen Oeffnung des Fallschirmes 401 beim Ausfall des Auftriebschubes. Da das Fluggerät keine exponierten Rotor- oder Flügelanordnung aufweist, kann der Fallschirm 401 mit sehr kurzen Leinen senkrecht nach oben ausgeschossen werden.

In der mit Stufe 1 bezeichneten Darstellung befinden sich der Fallschirm 401 in verpacktem Zustand in einer Fallschirmhülse 402 mit Treibsätzen 403. Die Treibsätze 403 zur beschleunigten Oeffnung des Fallschirms 401 sind noch nicht aktiviert. Ebenfalls im Fallschirm 401 verpackt befindet sich eine Expansionspatrone 404 mit einem geeigneten Sprengsatz, welche durch Expansion bewirkt, das Volumen des Fallschirms 401 schneller zu füllen. In der mit Stufe 2 bezeichneten Darstellung zieht der mittlere Treibsatz 403 den Fallschirm 401 aus der Fallschirmhülse 402 bis zur vollständigen Streckung von Rettungsschirmleinen 405. Diese aktivieren, wie in Stufe 3 ersichtlich, die Hilfstreibsätze 403a u. 403b, welche den Fallschirm 401 schneller öffnen. Ebenfalls zur schnelleren Oeffnung des Fallschirms 401 tragen Strömungslaschen 406 bei. Gleichzeitig mit den Hilfstreibsätzen 403a. u. 403b wird die an der Unterseite des Fallschirms 401 befindliche Expansionspatrone 404 aktiviert. Mit deren Hilfe wird der Fallschirm 401 in kürzester Zeit geöffnet. In der mit Stufe 4 bezeichneten Phase befindet sich der Fallschirm 401 in geöffnetem Zustand.

### Bezugsziffernliste:

- P: Pilotperson
- X: Schwerpunktachse
- 1: Rahmen
- 2: Kardangelenk
- 2': Kardanring
- 3: Bügelverbindung
- 4: Motoraufhängung
- 5: Zylinderkopfaufhängung
- 6: Dreh- und Kippgelenk
- 7: Motorhauptbefestigungsschrauben
- 8: Ständer
- 9: Verbindungsspant
- 10: Treibstoffbehälter
- 11: Messeinheit für Tankinhalt
- 12: Tankentlüftung
- 13: Tankeinfüllstutzen
- 14: Treibstoffanschlussnippel
- 15: Schwellwände
- 16: Gurtensystem
- 17: Gurtenlaschenbefestigung
- 100: Antriebsvorrichtung
- 101: Auspuffsystem
- 102: Anschlussflansch
- 103: Wasserkühler
- 104: Vibrationsdämpfer
- 105: Handstarter
- 106: Torsionshülse
- 107: Kurbelwelle
- 108: Antriebswelle
- 109: Luftleitschaufeln
- 110: kardanische Welle
- 111: Ringwasserkühler
- 112: Ringwasserkühler mit Luftführungsring
- 113: Bypassystem
- 114: Befestigungsrahmen
- 115: Kühlrotor
- 116: Riemenscheibe
- 117: Zahnriemen
- 118: Luftleitkanal
- 119: Flachkühler
- 120: Luftleitkanal am Schubrohr
- 121: Wasserkühlelement
- 122: Startriemenscheibe
- 123: Verbindungsspeichen
- 200: Flügelradkompressor
- 200': Flügelrad
- 201: Kompressormantel
- 202: Kompressoransaugtrichter
- 203: Kompressorflügel
- 204: Kompressornabe
- 205: Stator
- 205': Statorflügelrad
- 206: Verschalung
- 207: Rahmenaufnahme
- 208: Flügelradwelle
- 209: Ablenkdüse
- 210: Drosselklappe
- 300: Schubrohr
- 301: Auslenkungskompensator
- 302: Trimmflügel
- 303: Kabelzug
- 304: Austrittsdüse
- 305: Austrittsdüse
- 306: Verwindung des Schubrohres
- 307: Verwindung der Schubrohres
- 308: Instrumente
- 309: Steuerarm
- 310: Gasgriff
- 311: Drehgriff
- 312: Bewegliche Steuerdüse
- 313: Drehgelenk
- 314: Hohlwelle
- 315: Steuerflügel längs
- 316: Steuerflügel quer
- 317: Drehachse
- 318: Steuerbügel
- 319: Schraubverbindung
- 320: weiterer Kardanring
- 321: weiterer Verbindungsbügel
- 322: weiterer Auslenkungskompensator
- 400: Notrettungssystem
- 401: Fallschirm
- 402: Fallschirmhülse
- 403: Treibsatz
- 403a: Hilfstreibsatz
- 403b: Hilfstreibsatz
- 404: Expansionspatrone
- 405: Rettungsschirmleine
- 406: Strömungslaschen
- 407: Notfallschirmlasche
- 408: Aufprallabsorber

## Patentansprüche

1. Auf eine Last aufsetzbares und befestigbares Fluggerät, wobei die Last zur Ausübung von Steuerfunktionen fähig ist um mit Hilfe des Fluggeräts autonom vom Boden abzuheben und sich im Schwebeflug über dem Boden zu bewegen oder stationär zu halten, umfassend:
- eine an der Last befestigbare Tragvorrichtung zum Erstellen einer im wesentlichen kraftschlüssigen Verbindung zwischen dem Fluggerät und der Last,
- Eine Antriebsvorrichtung zur Erzeugung eines Gasstroms,
- mindestens einen Treibstoffbehälter (10) für Treibstoff zum Betrieb der Antriebsvorrichtung,
- mindestens zwei Schubrohre (300), die in seitlich neben der Last an Luftaustrittsenden angeordnete Austrittsdüsen (304, 305) münden und durch welche je ein in der Richtung, einstellbarer Gasstrom austritt, wobei der Austritt der Gasströme durch die Austrittsdüsen (304, 305) eine resultierende Auftriebskraft erzeugt, die das Abheben sowie die Flugbewegung bzw. den Schwebeflug der Last bewerkstelligt,
**dadurch gekennzeichnet, dass**
- die Antriebsvorrichtung ein Antriebsmotor (100) ist, der über eine rotierende Antriebswelle (108) direkt an ein Flügelrad (200') eines Flügelradkompressors (200) zur Erzeugung des Gasstrom in Form eines Luftstroms gekoppelt ist,
- der Flügelradkompressor (200) einen Kompressoransaugtrichter (202) aufweist, der sich in normaler Fluglage des Fluggerätes über der Last befindet und dessen Hauptachse in dieser Fluglage im wesentlichen vertikal verläuft,
- die rotierende Antriebswelle (108) für den Antrieb des Flügelradkompressors (200) in normaler Fluglage des Fluggerätes im wesentlichen senkrecht steht,
- die Austrittsdüsen (304, 305) in normaler Fluglage des Fluggerätes im wesentlichen in einer die vertikale Schwerpunktachse (X) enthaltenden Ebene und vorzugsweise über dem gemeinsamen Schwerpunkt von Fluggerät und Last angeordnet sind und
- der Luftstrom, den das Flügelrad (200') des Flügelradkompressors (200) erzeugt, durch die Gesamtheit der Schubrohre (300) und deren Austrittsdüsen (304, 305) mit Unterschallgeschwindigkeit ausgestossen wird.

2. Fluggerät nach Anspruch 1, **dadurch gekennzeichnet, dass** die Last eine Pilotperson (P) ist.

3. Fluggerät nach Anspruch 1, **dadurch gekennzeichnet, dass** die Last eine ferngelenkte Steuervorrichtung (409) ist.

4. Fluggerät nach Anspruch 1, **dadurch gekennzeichnet, dass** die Antriebsvorrichtung (100) einen Verbrennungsmotor enthält.

5. Fluggerät nach Anspruch 4, **dadurch gekennzeichnet, dass** der Verbrennungsmotor ein Kolbenmotor ist.

6. Fluggerät nach Anspruch 1, **dadurch gekennzeichnet, dass** die Schubrohre (300) und der Flügelradkompressor (200) im wesentlichen aus Leichtbaumaterialien wie Faserverbundwerkstoffe bestehen.

7. Fluggerät nach Anspruch 1, **dadurch gekennzeichnet, dass** der Treibstoffbehälter (10) mit der daran angebrachten Tragvorrichtung, die Antriebsvorrichtung (100) und der Flügelradkompressor (200) eine erste Einheit bilden, dass die Gesamtheit der Schubrohre (300) eine zweite Einheit bildet und dass die beiden Einheiten über ein Kardangelenk (2) und einen Auslenkungskompensator (301) im Bereich des Flügelradkompressors (200) zum Zweck der Steuerung des Fluggerätes durch die zur Ausübung von Steuerfunktionen fähige Last miteinander verbunden sind.

8. Fluggerät nach Anspruch 1, **dadurch gekennzeichnet, dass** der Treibstoffbehälter (10) mit der daran angebrachten Tragvorrichtung und die Antriebsvorrichtung (100) eine erste Einheit bilden, dass die Gesamtheit der Schubrohre (300) und der Flügelradkompressor (200) eine zweite Einheit bildet und dass die beiden Einheiten über ein Kardangelenk (2) im Bereich des Flügelradkompressors (200) zum Zweck der Steuerung des Fluggerätes durch die zur Ausübung von Steuerfunktionen fähige Last miteinander verbunden sind und dass die Antriebsvorrichtung (100) über eine kardanische Welle (110), welche vorzugsweise zwei homokinetische Kardangelenke umfasst, mit dem Flügelradkompressor (200) verbunden ist.

9. Fluggerät nach Anspruch 1, **dadurch gekennzeichnet, dass** die Antriebsvorrichtung (100), der Flügelradkompressor (200) und die Gesamtheit der Schubrohre (300) eine erste Einheit bilden, dass der Treibstoffbehälter (10) mit der daran angebrachten Tragvorrichtung eine zweite Einheit bildet und dass die beiden Einheiten über ein Dreh- und Kippgelenk (6) zum Zweck der Steuerung des Fluggerätes durch die zur Ausübung von Steuerfunktionen fähige Last miteinander verbunden sind.

10. Fluggerät nach Anspruch 1, **dadurch gekennzeichnet, dass** die Luftaustrittsenden der Schubrohre (300) in normaler Fluglage des Fluggerätes windschief sowie axialsymmetrisch zur vertikalen Schwerpunktachse (X) angeordnet sind, um dem Fluggerät ein Drehmoment zu erteilen, welches ein von der Antriebsvorrichtung (100) erzeugtes Drehmoment weitgehend kompensiert, und dass die Feinabstimmung der Drehmomentkompensation mit Trimmflügeln (302), die im Bereich der Austrittsdüsen (304, 305) angeordnet sind, erfolgt.

11. Fluggerät nach Anspruch 1, **dadurch gekennzeichnet, dass** die Luftaustrittsenden der Schubrohre (300) in normaler Fluglage des Fluggerätes gerade nach unten angeordnet sind und zwei in horizontaler Richtung angeordnete Ablenkdüsen (209) vorhanden sind, in die ein Teil des Luftstromes abgezweigt und durch dieselben ausgestossen wird um dem Fluggerät ein Drehmoment zu erteilen, welches ein von der Antriebsvorrichtung (100) erzeugtes Drehmoment weitgehend kompensiert, und dass die Feinabstimmung der Drehmomentkompensation mit Drosselklappen (210) erfolgt, die den Ablenkdüsen (209) vorgeschaltet sind.

12. Fluggerät nach Anspruch 1, **dadurch gekennzeichnet, dass** zur Steuerung des Fluggerätes überkreuz angeordnete, mittels Kabelzügen steuerbare Steuerflügel (315, 316) oder über ein Kardangelenk einstellbare bewegliche Steuerdüsen (312) im Bereich der Austrittsdüsen (304, 305) vorhanden sind.

13. Fluggerät nach Anspruch 1, **dadurch gekennzeichnet, dass** es mit einem Notrettungssystem mit einem oder mehreren Fallschirmen (401) versehen ist.

14. Fluggerät nach Anspruch 13, **dadurch gekennzeichnet, dass** das Notrettungssystem eine Expansionspatrone (404) zum schnellen Aufblähen des Fallschirmes (401) beinhaltet.

15. Fluggerät nach Anspruch 13, **dadurch gekennzeichnet, dass** das Notrettungssystem mehrere Treibsätze (403, 403a, 403b) zum schnellen Ausziehen und Oeffnen des Fallschirmes (401) beinhaltet.

16. Fluggerät nach Anspruch 13, **dadurch gekennzeichnet, dass** es mit einem Aufprallabsorber (408) versehen ist.

17. Fluggerät nach Anspruch 5, **dadurch gekennzeichnet, dass** am Kompressoransaugtrichter (202) ein Ringwasserkühler (111) zur Kühlung des Kolbenmotors vorhanden ist.

18. Fluggerät nach Anspruch 17, **dadurch gekennzeichnet, dass** am Kompressoransaugtrichter (202) ein Ringwasserkühler (111) mit Luftführungsring (112) zur Kühlung des Kolbenmotors vorhanden ist.

19. Fluggerät nach Anspruch 5, **dadurch gekennzeichnet, dass** an den Schubrohrenden der Schubrohre (300) Wasserkühlelemente (121) zur Kühlung des Kolbenmotors vorhanden sind.

20. Fluggerät nach Anspruch 5, **dadurch gekennzeichnet, dass** unter der Antriebsvorrichtung (100) ein von der Antriebswelle (108) angetriebener Kühlrotor (115) und ein Flachkühler (119) zur Kühlung des Kolbenmotors vorhanden ist.

21. Fluggerät nach Anspruch 5, **dadurch gekennzeichnet, dass** ein Bypassystem (113) unter dem Statorring (205) des Flügelradkompressors (200) angeordnet ist, das direkt mit den Ansaugtrichtern des Motorvergasers der Antriebsvorrichtung (100) verbunden ist und zur Aufladung der Motorleistung dient.

22. Fluggerät nach Anspruch 1, **dadurch gekennzeichnet, dass** ein motorseitiger Anschlussflansch 102 als Anschlussflansch mit einer Startriemenscheibe 122 ausgebildet ist, um den Motor mittels einem auf der Startriemenscheibe aufwickelbarem Seil von Hand zu starten, und dass der Anschlussflansch flügelartig ausgebildete Verbindungsspeichen 123 aufweist.

## Claims

1. Flying machine which can be fitted to and mounted on a load, the load being capable of carrying out control functions in order to lift off from the ground autonomously with the aid of the flying machine and to move or keep itself stationary in hovering flight above the ground, comprising:
- a mounting apparatus which can be mounted on the load for producing an essentially force-fitting connection between the flying machine and the load,
- a drive apparatus for producing a gas flow,
- at least one fuel container (10) for fuel for operating the drive apparatus,
- at least two thrust tubes (300) which open in outlet nozzles (304, 305) arranged at the side alongside the load at air outlet ends and through which in each case one gas flow emerges whose direction is adjustable, the outlet of the gas flows through the outlet nozzles (304, 305) producing a resultant lift force which produces the lifting off as well as the flight movement and the hovering flight of the load,
characterized in that
- the drive apparatus is a drive motor (100) which is coupled via a rotating drive shaft (108) directly to an impeller (200') of an impeller compressor (200) for producing the gas flow in the form of an air flow,
- the impeller compressor (200) has a compressor intake funnel (202) which, when the flying machine is in the normal flying attitude, is located above the load and whose main axis runs essentially vertically in this flying attitude,
- the rotating drive shaft (108) is essentially vertical for driving the impeller compressor (200) in the normal flying attitude of the flying machine,
- the outlet nozzles (304, 305) in the normal flying attitude of the flying machine are essentially arranged in a plane containing the vertical centre of gravity axis (X) and are preferably arranged above the common centre of gravity of the flying machine and load, and
- the air flow which the impeller (200') of the impeller compressor (200) produces is ejected through the totality of the thrust tubes (300) and their outlet nozzles (304, 305) at subsonic speed.

2. Flying machine according to Claim 1, characterized in that the load is a pilot (P).

3. Flying machine according to Claim 1, characterized in that the load is a remote-controlled apparatus (409).

4. Flying machine according to Claim 1, characterized in that the drive apparatus (100) contains an internal combustion engine.

5. Flying machine according to Claim 4, characterized in that the internal combustion engine is a piston engine.

6. Flying machine according to Claim 1, characterized in that the thrust tubes (300) and the impeller compressor (200) are essentially made of light materials such as fibre composite materials.

7. Flying machine according to Claim 1, characterized in that the fuel container (10) together with the mounting apparatus fitted to it, the drive apparatus (100) and the impeller compressor (200) form a first unit, in that the totality of the thrust tubes (300) forms a second unit, and in that the two units are connected to one another via a universal joint (2) and a deflection compensator (301) in the region of the impeller compressor (200) for the purpose of controlling the flying machine by means of the load, which is capable of carrying out control functions.

8. Flying machine according to Claim 1, characterized in that the fuel container (10) together with the mounting apparatus fitted to it and the drive apparatus (100) form a first unit, in that the totality of the thrust tubes (300) and the impeller compressor (200) form a second unit, and in that the two units are connected to one another via a universal joint (2) in the region of the impeller compressor (200) for the purpose of controlling the flying machine by means of the load, which is capable of carrying out control functions, and in that the drive apparatus (100) is connected to the impeller compressor (200) via a shaft (110) which has a universal joint and which preferably comprises two homokinetic universal joints.

9. Flying machine according to Claim 1, characterized in that the drive apparatus (100), the impeller compressor (200) and the totality of the thrust tubes (300) form a first unit, in that the fuel container (10) together with the mounting apparatus fitted to it forms a second unit, and in that the two units are connected to one another via a rotating and tilting joint (6) for the purpose of controlling the flying machine by means of the load, which is capable of carrying out control functions.

10. Flying machine according to Claim 1, characterized in that the air outlet ends of the thrust tubes (300) in the normal flying attitude of the flying machine are arranged inclined to the wind and axially symmetrically with respect to the vertical centre of gravity axis (X) in order to give the flying machine a torque which largely compensates for a torque produced by the drive apparatus (100), and in that the fine adjustment of the torque compensation is carried out using trim tabs (302), which are arranged in the region of the outlet nozzles (304, 305).

11. Flying machine according to Claim 1, characterized in that the air outlet ends of the thrust tubes (300) in the normal flying attitude of the flying machine are arranged straight down and two deflection nozzles (209) are provided which are arranged in the horizontal direction and into which a part of the air flow is bled and is ejected through the same in order to give the flying machine a torque which largely compensates for a torque produced by the drive apparatus (100), and in that the fine adjustment of the torque compensation is carried out by throttle flaps (210) which are positioned upstream of the deflection nozzles (209).

12. Flying machine according to Claim 1, characterized in that the flying machine is controlled by control tabs (315, 316) which are arranged diagonally opposite and can be controlled by means of cable runs, or by moving control nozzles (312) which are adjustable via a universal joint and are in the region of the outer nozzles (304, 305).

13. Flying machine according to Claim 1, characterized in that said flying machine is provided with an emergency rescue system having one or more parachutes (401).

14. Flying machine according to Claim 13, characterized in that the emergency rescue system includes an expansion cartridge (404) for rapid inflation of the parachute (401).

15. Flying machine according to Claim 13, characterized in that the emergency rescue system includes a plurality of propellant charges (403, 403a, 403b) for rapid extraction and opening of the parachute (401).

16. Flying machine according to Claim 13, characterized in that said flying machine is provided with an impact absorber (408).

17. Flying machine according to Claim 5, characterized in that the compressor intake funnel (202) is provided with an annular water cooler (111) for cooling the piston engine.

18. Flying machine according to Claim 17, characterized in that the compressor intake funnel (202) is provided with an annular water cooler (111) with an air guide ring (112) for cooling the piston engine.

19. Flying machine according to Claim 5, characterized in that water cooling elements (121) for cooling the piston engine are provided at the thrust tube ends of the thrust tubes (300).

20. Flying machine according to Claim 5, characterized in that a cooling rotor (115), which is driven by the drive shaft (108), and a surface cooler (119), for cooling the piston engine, are provided under the drive apparatus (100).

21. Flying machine according to Claim 5, characterized in that a bypass system (113) is arranged under the stator ring (205) of the impeller compressor (200), is connected directly to the intake funnels of the engine carburettor of the drive apparatus (100) and is used for super charging the engine power.

22. Flying machine according to Claim 1, characterized in that a connecting flange (102) on the engine side is designed as a connecting flange with a starting belt pulley (122) in order to start the engine by hand by means of a cable which can be wound on the starting belt pulley, and in that the connecting flange has connecting spokes (123) which are designed like vanes.

## Revendications

1. Aéronef susceptible d'être installé et fixé sur une charge, la charge étant en mesure d'exercer des fonctions de commande-pilotage afin de pouvoir s'élever du sol de façon autonome à l'aide de l'aéronef, de se déplacer au-dessus du sol en un vol stationnaire ou bien de rester stationnaire, comprenant :
- un dispositif support susceptible d'être fixé sur la charge, destiné à établir une liaison sensiblement d'ordre mécanique entre l'aéronef et la charge,
- un dispositif d'entraînement destiné à générer un flux gazeux,
- au moins un récipient à combustible (10), destiné au combustible nécessaire au fonctionnement du dispositif d'entraînement,
- au moins deux tubes de poussée (300), débouchant dans des tuyères de sortie (304, 305) disposées latéralement, à côté de la charge, aux extrémités de sortie d'air, et à travers chacune desquelles sort un flux de gaz, réglable en direction, la sortie des flux de gaz se faisant par les tuyères de sortie (304, 305) générant une force ascensionnelle résuailetéeante, qui assure le décollage ainsi que le déplacement en vol, respectivement le vol stationnaire de la charge,
caractérisé en ce que,
- le dispositif d'entraînement est un moteur de propulsion (100) qui est couplé directement, par l'intermédiaire d'un arbre d'entraînement (108) tournant, à une roue ailetée (200) appartenant à un compresseur à roue ailetée (200) destiné à générer le flux de gaz, sous la forme d'un flux d'air,
- le compresseur à roue ailetée (200) présentant un cône d'aspiration de compresseur (202) se trouvant au-dessus de la charge dans la position de vol normale de l'aéronef et dont l'axe principal est orienté sensiblement verticalement dans cette position de vol,
- l'arbre d'entraînement (108) tournant destiné à entraîner le compresseur à roue ailetée (200) étant orienté sensiblement verticalement lorsque l'aéronef se trouve dans la position de vol normale,
- les tuyères de sortie (304, 305) étant orientées sensiblement dans un plan contenant l'axe vertical de gravité (X) lorsque l'aéronef est en position de vol normale et étant disposées de préférence au-dessus du centre de gravité commun de l'aéronef et de la charge, et
- le flux d'air que génère la roue ailetée (200') du compresseur à roue ailetée (200) étant expulsé par l'ensemble des tubes de poussée (300) et de leurs tuyères de sortie (304, 305), à une vitesse subsonique.

2. Aéronef selon la revendication 1, caractérisé en ce que la charge est constituée par un pilote humain (P).

3. Aéronef selon la revendication 1, caractérisé en ce que la charge est constituée par un dispositif de commande (409) télécommandé.

4. Aéronef selon la revendication 1, caractérisé en ce que le dispositif d'entraînement (100) contient un moteur à combustion interne.

5. Aéronef selon la revendication 4, caractérisé en ce que le moteur à combustion interne est un moteur à pistons.

6. Aéronef selon la revendication 1, caractérisé en ce que les tubes de poussée (300) et le compresseur à roue ailetée (200) sont constitués essentiellement de matériaux de construction légers, tels que des matériaux composites à fibres.

7. Aéronef selon la revendication 1, caractérisé en ce que le récipient à carburant (10) avec le dispositif support monté sur lui, le dispositif d'entraînement (100) et le compresseur à roue ailetée (200) constituent un premier ensemble, en ce que la totalité des tubes de poussée (300) constitue un deuxième ensemble, et en ce que les deux ensembles sont reliés ensemble par l'intermédiaire d'une articulation de cardan (2) et d'un compensateur de déviation (301) dans la zone du compresseur à roue ailetée (200) dans le but de piloter l'aéronef au moyen de la charge, charge susceptible d'exercer des fonctions de pilotage.

8. Aéronef selon la revendication 1, caractérisé en ce que le récipient à carburant (10) avec le dispositif support monté dessus et le dispositif d'entraînement (100) constituent un premier ensemble, en ce que l'ensemble des tubes de poussée (300) et le compresseur à roue ailetée (200) constituent un deuxième ensemble, et en ce que les deux ensembles sont reliés ensemble par l'intermédiaire d'une articulation de cardan (2), dans la zone du compresseur à roue ailetée (200), dans le but de piloter l'aéronef au moyen de la charge susceptible d'exercer des fonctions de pilotage, et en ce que le dispositif d'entraînement (100) est relié au compresseur à roue ailetée (200) par l'intermédiaire d'un arbre de cardan (110) comprenant de préférence deux articulations de cardan homocinétiques.

9. Aéronef selon la revendication 1, caractérisé en ce que le dispositif d'entraînement (100), le compresseur à roue ailetée (200) et l'ensemble des tubes de poussée (300) constituent un premier ensemble, en ce que le récipient à carburant (10) avec le dispositif support monté dessus constitue un deuxième ensemble, et en ce que les deux ensembles sont reliés ensemble par l'intermédiaire d'une articulation à rotation et à basculement (6), dans le but de piloter l'aéronef au moyen de la charge susceptible d'exercer des fonctions de pilotage.

10. Aéronef selon la revendication 1, caractérisé en ce que les extrémités de sortie d'air des tubes de poussée (300) sont disposées, lorsque l'aéronef se trouve dans la position de vol normale, de façon déjetée ainsi que répondant à une symétrie axiale par rapport à l'axe vertical (X) passant par le centre de gravité, afin de conférer à l'aéronef un couple qui est largement compensé par le couple généré par le dispositif d'entraînement (100), et en ce que le réglage fin de la compensation en couple s'effectue à l'aide de volets d'équilibrage (300) disposés dans la zone des tuyères de sortie (304, 305).

11. Aéronef selon la revendication 1, caractérisé en ce que les extrémités de sortie d'air des tubes de poussée (300) sont disposées orientés directement vers le bas lorsque l'aéronef est en position de vol normale et deux tuyères de déviation (209), disposées en direction horizontale, étant prévues, dans lesquelles une partie du flux d'air est ramifié et est expulsé à travers celles-ci, pour conférer à l'aéronef un couple qui est largement compensé par le couple généré par le dispositif d'entraînement (100), et en ce que le réglage fin de la compensation en couple s'effectuant à l'aide de clapets d'étranglement (210) montés en amont des tuyères de déviation (209).

12. Aéronef selon la revendication 1, caractérisé en ce que des volets de commande (315, 316), pouvant être commandés à l'aide de câbles d'actionnement et disposés en croix en vue de piloter l'aéronef, ou bien des tuyères de commande (312) mobiles réglable par l'intermédiaire d'une articulation de cardan, sont prévus dans la zone des tuyères de sortie (304, 305).

13. Aéronef selon la revendication 1, caractérisé en ce qu'il est pourvu d'un système de sauvetage de secours équipé d'un ou de plusieurs parachutes (401).

14. Aéronef selon la revendication 13, caractérisé en ce que le système de sauvetage de secours contient une cartouche à expansion (404) destinée à produire un gonflage rapide du parachute (401).

15. Aéronef selon la revendication 13, caractérisé en ce que le système de sauvetage de secours contient plusieurs éléments propulseurs (403, 403a, 403b) destinés à produire une extraction et une ouverture rapide du parachute (401).

16. Aéronef selon la revendication 13, caractérisé en ce qu'il pourvu d'un absorbeur de chocs (408).

17. Aéronef selon la revendication 5, caractérisé en ce qu'est prévu sur le cône d'aspiration de compresseur (202) un radiateur annulaire à eau (111), destiné au refroidissement du moteur à pistons.

18. Aéronef selon la revendication 17, caractérisé en qu'un radiateur annulaire à eau (111) est prévu sur le cône d'aspiration de compresseur (202), avec un anneau de guidage d'air (112), pour assurer le refroidissement du moteur à pistons.

19. Aéronef selon la revendication 5, caractérisé en ce que des éléments de refroidissement à eau (121) destinés au refroidissement du moteur à pistons sont prévus sur les extrémités des tubes de poussée (300).

20. Aéronef selon la revendication 5, caractérisé en ce que sous le dispositif d'entraînement (100) est prévu un rotor de refroidissement (115) entraîné par l'arbre d'entraînement (108) et un radiateur plat (119), destiné au refroidissement du moteur à pistons.

21. Aéronef selon la revendication 5, caractérisé en ce qu'un système de dérivation (113) est disposé sous l'anneau de stator (205) du compresseur à roue ailetée (200) et est relié directement aux trompettes coniques d'aspiration du carburateur du moteur du dispositif d'entraînement (100) et sert à assurer une suralimentation d'augmentation de la puissance moteur.

22. Aéronef selon la revendication 1, caractérisé en ce qu'une bride de raccordement (102) située côté moteur est réalisée à titre de bride de raccordement équipée d'un disque à courroie de démarrage (122), afin de démarrer à la main le moteur au moyen d'un câble susceptible d'être enroulé sur une poulie de courroie de démarrage, et en ce que la bride de raccordement présente des rayons de liaison (132) réalisés sous formes d'ailettes.
